# FASCICULE DE BREVET EUROPEEN

(11) **EP 0 875 541 B1**
(45) Date de publication et mention de la délivrance du brevet: **10.09.2003**
(21) Numéro de dépôt: 98401010.8
(22) Date de dépôt: 24.04.1998
(51) Int. Cl.: C09D 5/02, D06M 15/29, C08L 57/12

(54) **Système monocomposant à base de latex coréactifs**
Einphasiges System auf Basis von coreaktiven Latexharzen
Single phase system based on coreactive latex resins

(30) Priorité: 29.04.1997 FR 9705270
(43) Date de publication de la demande: 04.11.1998
(73) Titulaire: Atofina, 92800 Puteaux (FR)
(72) Inventeur: Vergé, Christophe, 27170 Beaumontel (FR); Betremieux, Isabelle, 27170 Beaumontel (FR)
(74) Mandataire: Rieux, Michel

(56) Documents cités:
- EP-A- 0 005 167

## Description

La présente invention porte sur un système monocomposant à base d'un mélange de latex coréactifs, conduisant à des revêtements réticulables à température ambiante et post-réticulables par traitement thermique.

L'industrie des revêtements (peinture, adhésifs, papier, cuir, textile) utilise des latex comme liants dans des formulations filmogènes qui nécessitent dans certains cas une post-réticulation destinée à améliorer les propriétés des revêtements obtenus, en particulier au niveau de leur tenue aux solvants et de leurs propriétés mécaniques, et à réduire le collant superficiel, ce qui permet de diminuer, dans le cas des peintures extérieures, le potentiel de salissure.

Cette étape de post-réticulation doit être adaptée au domaine d'application et aux conditions de mises en oeuvre (le domaine des peintures ne permet pas d'envisager de traitement thermique du revêtement, alors que l'industrie textile utilise couramment des procédés de thermoréticulation à des températures de l'ordre de 160°C).

Quelle que soit l'application visée, l'objectif est néanmoins d'obtenir un système le plus réactif possible à la température la plus basse possible, tout en étant monocomposant, c'est-à-dire prêt à l'emploi et stable au stockage, les deux exigences étant bien souvent antagonistes.

Par ailleurs, les contraintes en matière de protection des personnes et de l'environnement font qu'un autre objectif consiste à réduire les émissions de composés organiques volatils, comme les solvants utilisés pour la plastification temporaire des latex (diminution de la température de filmification sans diminution de la température de transition vitreuse du copolymère et donc sans diminution des propriétés mécaniques du film), le formol.

La Société déposante a maintenant découvert un mélange de latex capable de répondre à l'ensemble de ces objectifs, car il est stable au stockage et il conduit à des films réticulables à température ambiante, cette réticulation étant activée par un traitement thermique à haute température qui n'entraîne qu'un faible dégagement de formol.

Les deux latex qui composent le mélange selon l'invention sont des latex fonctionnalisés, l'un par un groupement de type uréido, et l'autre par un groupement du type N-alkylol. Une fois synthétisés, ces latex peuvent être mélangés sans que la réaction entre les fonctions précitées de chacun d'eux ne se produise au cours du stockage, et ils conduisent pendant ou après la coalescence à température ambiante à un film réticulé qui présente des propriétés améliorées par rapport aux latex de base, ladite réticulation pouvant être activée par un traitement thermique.

La découverte de cette combinaison de latex est d'autant moins évidente qu'il ne suffit pas que les fonctions précitées réagissent entre elles seulement pendant ou après la coalescence, car il faut encore que la cinétique de réticulation ne perturbe pas la coalescence des particules et donc la formation du film - une trop grande vitesse de réticulation pourrait en effet gêner la formation du film et rendre un système inutilisable.

Par le brevet américain US-A-5 071 902 et la demande de brevet européen EP-A-488 605, on connaît l'utilisation de monomères à fonction uréido en association avec du N-méthylol acrylamide par copolymérisation, en vue de l'obtention de latex conduisant à des films thermoréticulables présentant des teneurs en formol libre et libérable réduites.

Ces deux documents concernent le piégeage du formol libéré par le N-méthylol acrylamide par le monomère à fonction uréido sans altération de la réticulation du film par le N-méthylol acrylamide, et ne mentionnent absolument pas la possibilité d'obtenir un système réactif N-alkylol/uréido.

Le système selon la présente invention et de tels latex connus "difonctionnels" se comportent tout à fait différemment ; ainsi, l'Exemple 3 ci-après montre bien l'impossibilité d'augmenter la réticulation par un traitement thermique dans le cas où l'on utilise un tel latex connu "difonctionnel". Dans le système de l'invention, le N-alkylol amide ou similaire ne réagit plus avec lui-même comme c'est le cas avec le processus classique, l'absence de libération de formol s'expliquant dans ce cas par le fait que le N-alkylol acrylamide ou similaire réagit avec les groupements uréido par un autre mécanisme, lequel ne met pas en jeu d'étape de formation de formol.

La présente invention a donc d'abord pour objet un système monocomposant à base de latex coréactifs, susceptible de conduire à des revêtements réticulables à basse température et post-réticulables par traitement thermique, ledit système étant constitué par le mélange de deux dispersions de particules, (A) et (B), obtenues chacune par polymérisation en émulsion en milieu aqueux d'une composition de monomères respectivement A et B,
(a) au moins un monomère à insaturation éthylénique polymérisable par voie radicalaire, comportant un groupe fonctionnel 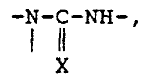 X représentant O ou S, entrant dans la composition de monomères A ; et
(b) au moins un monomère à insaturation éthylénique polymérisable par voie radicalaire, comportant un groupe fonctionnel N-alkylol ou N-alkylol masqué entrant dans la composition de monomères B.

Les monomères (a) peuvent être choisis parmi ceux représentés par les formules (I) à (III) ci-après : 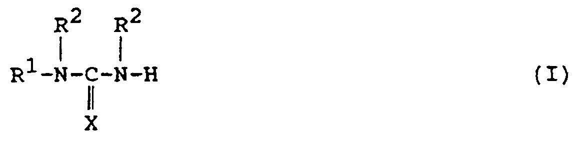 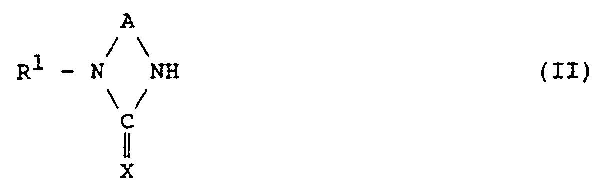 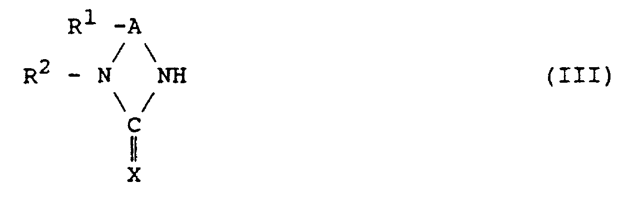 dans lesquelles :
- X représente O ou S ;
- R¹ est un groupement à insaturation éthylénique, polymérisable par voie radicalaire ;
- R² est un atome d'hydrogène ou un groupe alkyle en C₁-C₈ ; et
- A est une chaîne alkylène à 2 ou 3 atomes de carbone qui peut être substituée par alkyle inférieur et/ou hydroxy et/ou alcoxy en C₁-C₄, et/ou qui peut être interrompue par carbonyle.

Le groupement R¹ ci-dessus peut être choisi parmi les groupes :
·

   CH₂=CH-
·

   CH₂=CH-CH₂-
· 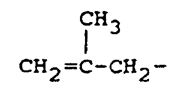
· 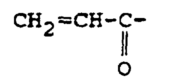
· 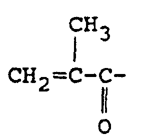
· 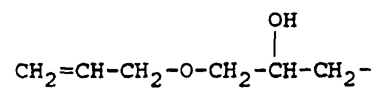
·

   R³-A¹-Alk-

   où :
   - R³ représente hydrogène, 3-alkyloxy-2-hydroxypropyle, vinyle, méthacryloyle, acryloyle ou méthacryloyloxyacéto
   - A¹ représente O, NH ou NR⁴ ;
   - R⁴ représente 3-allyloxy-2-hydroxypropyle lorsque R³ représente 3-allyloxy-2-hydroxypropyle ;
   - Alk représente une chaîne alkylène en C₂-C₈ ; et
· 2-(β-carboxyacrylamido)éthyle.

A titre d'exemples de monomères (a), on peut citer la N-(2-méthacryloyloxyéthyl) éthylène urée, la N-(2-acryloyloxyéthyl) éthylène urée, la N-(méthacrylamidométhylène) éthylène urée, la N-(acrylamidométhylène)-éthylène urée, la N-(β-méthacrylamidoéthyl)-éthylène urée, la N-(β-acrylamidoéthyl)-éthylène urée, la N-vinyl-éthylène urée, la N-vinyloxyéthyl-éthylène urée, la N-[β-methacryloyloxyacétamido)-éthyl]-N,N'-éthylene urée, la N-[β-acryloyloxyacétamido)-éthyl]-éthylène urée, la 1-[2-[[2-hydroxy-3-(2-propényloxy)propyl]amino]éthyl]-2-imidazolidone, la N-méthacrylamidométhyl urée, la N-méthacryloyl urée, le N-(3-[1,3-diazacyclohexan-2-one]-propyl)méthacrylamide, la N-hydroxyéthyléthylène urée, la N-aminoéthyl éthylène urée, la N-(3-allyloxy-2-hydroxypropyl)aminoéthyl éthylène urée, la N-méthacrylaminoéthyl éthylène urée, la N-acrylaminoéthyl éthylène urée, la N-méthacryloxyacétoxyéthyl éthylène urée, la N-méthacryloxy-acétaminoéthyl éthylène urée et la N-di(3-allyloxy-2-hydroxy-propyl)aminoéthyl éthylène urée, la N-(2-acryloyl-oxy-éthyl)éthylène urée, la N-méthacrylamidométhyl urée, et les allyl alkyl éthylène urées.

Un monomère (a) particulièrement préféré est la N-(2-méthacryloyloxyéthyl)-éthylène urée (1-(2-méthacryloyloxy éthyl)-imidazolin-2-one).

Quant aux monomères (b), ils peuvent être choisis parmi les N-méthylolamides d'acides carboxyliques insaturés ayant 3 à 10 atomes de carbone, tels que le N-méthylolacrylamide et le N-méthylolméthacrylamide, le N-méthylolmaléimide, l'acide N-méthylolmaléinamique, les esters d'acide N-méthylolmaléinamique, les N-méthylolamides des acides vinyl aromatiques, tels que le N-méthylol-p-vinylbenzamide, et, à titre de monomères (b) à groupes N-alkylol masqués, les N-(alcoxy inférieur méthyl)amides de l'acide acrylique et/ou méthacrylique.

Les monomères (b) préférés sont le N-méthylolacrylamide et le N-méthylol méthacrylamide.

De préférence, le ou les monomères (a) et (b) représentent de 0,5 à 10% en poids, en particulier de 1 à 5% en poids, de la composition de monomères respectivement A et B. Les monomères (a) et (b) peuvent être introduits de façon homogène avec les autres monomères ou dans des gradients de compositions qui permettent de conduire à des produits ayant des densités de fonctions différentes.

Les proportions des deux latex coréactifs selon la présente invention sont choisies telles que la proportion du polymère (A) est comprise entre 5 et 95% en poids, en particulier entre 25 et 75% en poids, des polymères (A) et (B), et la proportion du polymère (B) est comprise entre 95 et 5% en poids, en particulier entre 75 et 25% en poids des polymères (A) et (B), les extraits secs de chacune des dispersions étant généralement compris entre 20 et 60% en poids.

Par ailleurs, la dimension des particules de chacune des dispersions (A) et (B) est notamment comprise entre 50 et 500 nm.

Les monomères autres que les monomères (a) et (b) des deux dispersions de particules (A) et (B) de l'invention ne sont pas critiques, dès l'instant où les températures de transition vitreuse (Tg) des copolymères résultants ont été adaptées au domaine d'application visé. La combinaison de monomères capables de conduire à des homopolymères ayant différentes températures de transition vitreuse permet ainsi de régler la température de transition vitreuse de chacun des copolymères obtenus, c'est-a-dire par la combinaison de monomères conduisant à des Tg élevées avec des monomères conduisant à de basses Tg, ce qui est bien connu de l'homme du métier.

A titre d'exemples de monomères capables de conduire à des homopolymères ayant une basse Tg, on peut citer l'acrylate d'éthyle, l'acrylate de butyle, l'acrylate de 2-éthyl hexyle, l'acrylate de nonyle, le vinyl 2-éthyl hexanoate.

A titre d'exemples de monomères capables de conduire à des homopolymères ayant une température de transition vitreuse élevée, on peut citer le méthacrylate de méthyle, l'acétate de vinyle, le styrène, l'acide acrylique, l'acide méthacrylique, l'acrylamide.

Les deux latex selon l'invention sont préparés par polymérisation en émulsion dans les conditions bien connues de l'homme du métier. Ainsi, la réaction est préférentiellement conduite sous atmosphère inerte en présence d'amorceurs radicalaires. Le système d'amorçage utilisé peut être un système Red-Ox tel que K₂S₂O₈, (NH₄)₂S₂O₈ / Na₂S₂O₅, Na₂SO₃, un système thermique tel que (NH₄)₂S₂O₈, les quantités utilisées étant comprises entre 0,2 et 1,0% en poids par rapport à la masse totale des monomères, préférentiellement entre 0,25 et 0,5% en poids.

La réaction de polymérisation en émulsion selon l'invention est menée à une température comprise entre 65 et 85°C et est fonction de la nature du système d'amorçage utilisé ; 65-75°C pour les systèmes Red-Ox à base de peroxodisulfate et de métabisulfite, 70-85°C pour les systèmes thermiques à base de peroxodisulfate seul.

La préparation des dispersions selon l'invention est effectuée de préférence selon un procédé de type semi-continu, permettant de limiter les dérives de composition qui sont fonction des différences de réactivité des différents monomères. L'introduction des monomères sous forme d'une préémulsion avec une partie de l'eau et des tensio-actifs est ainsi généralement réalisée sur une période de temps de 3 heures 30 à 5 heures. Il est également utile, bien que non indispensable, d'effectuer un ensemencement de 1 à 15% des monomères. Les systèmes émulsifiants utilisés dans le procédé de polymérisation en émulsion selon l'invention sont choisis dans la gamme des émulsifiants possédant une balance hydrophile/lipophile adaptée. Les systèmes préférés sont constitués par l'association d'un tensio-actif anionique, tel que le laurylsulfate de sodium, les nonylphénol sulfates éthoxylés en particulier à 20 - 25 moles d'oxyde d'éthylène, le benzène dodécylsulfonate et les alcools gras éthoxylés sulfates, et d'un tensio-actif non ionique, tel que les nonylphénols éthoxylés en particulier à 10 - 40 moles d'oxyde d'éthylène et les alcools gras éthoxylés.

La quantité totale d'émulsifiant est généralement comprise dans la gamme de 1 à 5% en poids et préférentiellement de 2 à 4% en poids par rapport aux monomères.

Les mélanges des dispersions (A) et (B) selon l'invention sont réalisés à la température ambiante.

Les films issus des mélanges de latex selon l'invention ont été analysés tels qu'obtenus après séchage à la température ambiante, puis après un traitement thermique supplémentaire de 15 minutes à 160°C.

Les propriétés des films qui ont été évaluées sont la résistance aux solvants qui est déterminée par des mesures de pourcentages d'insolubles d'éprouvettes immergées dans l'acétone à température ambiante pendant 24h et du pourcentage d'acétone absorbé par ces mêmes éprouvettes, appelé aussi "indice de gonflement", ainsi que les propriétés mécaniques du film au travers d'un test de traction (détermination de la contrainte et de l'allongement à la rupture).

Le degré de réticulation des films - qui gouverne les bonnes propriétés applicatives de celui-ci - est caractérisé par un taux d'insolubles le plus élevé possible, un indice de gonflement le plus faible possible, ainsi qu'une contrainte et un allongement à la rupture les plus élevés possibles.

L'existence d'une réticulation à température ambiante du film lors de la coalescence est mise en évidence par un film issu de mélange conduisant à des propriétés supérieures à celles des latex de départ alors que l'existence d'une réticulation en température du film est mise en évidence par la comparaison des propriétés avant et après traitement thermique.

Dans ces conditions, il a été observé que les mélanges de latex coréactifs selon l'invention conduisent à des films qui réticulent à température ambiante et présentent donc des propriétés améliorées.

La bonne stabilité au stockage des mélanges de latex, autrement dit la possibilité de produire des systèmes monocomposants, est vérifiée par la détermination des propriétés d'un film obtenu à partir du mélange ayant subi un stockage de 10 jours à 60°C et la comparaison de ces propriétés avec les propriétés du film issu du mélange fraîchement préparé. La stabilité des latex est également vérifiée par un suivi des caractéristiques de base du latex, à savoir la taille des particules, la viscosité.

Les propriétés des films issus des mélanges de l'invention avant et après traitement thermique pendant 15 minutes à 160°C sont égales quel que soit le traitement subi par les mélanges de latex (mélange frais ou ayant subi un traitement de 10 jours à 60'C), montrant la bonne stabilité au stockage des mélanges.

La présente invention porte également sur l'utilisation du système monocomposant à base de latex coréactifs tel que défini ci-dessus comme liant dans des compositions destinées à constituer un revêtement réticulable, tel qu'une peinture dans le domaine du bâtiment, un vernis ou un apprêt pour cuirs, un apprêt pour textile, un vernis de protection pour bois, ou dans des compositions pour le couchage du papier ; comme liant et/ou agent d'imprégnation pour diverses matières textiles tissées ou non-tissées ; papier, carton, nappes de fibres ; et comme adhésif notamment dans l'industrie du bois.

Les exemples suivants illustrent la présente invention. Dans ces Exemples, les parties et pourcentages sont en poids sauf indication contraire. A l'Exemple 1, les quantités des ingrédients des formulations et des monomères sont exprimées en parties de matières actives.

### Exemple 1 : Synthèse de latex A, B et C

### Mode opératoire général

Dans un réacteur de 3 1, équipé d'une circulation d'eau chaude dans la double enveloppe, d'une agitation centrale et d'un condenseur, on introduit un pied de cuve formulé comme suit :
· Eau 54,00 parties
· Alcool gras éthoxylé sulfate de sodium à 32% dans l'eau 0,25
· Alcool gras éthoxylé à 65% dans l'eau 0,05
On homogénéise et on porte à 75°C.

Lorsque la température du pied de cuve atteint 75°C, on coule, en l'espace de 4 heures, la préémulsion et la solution d'amorceur, formulées comme suit :

### Préémulsion

· Eau 62,00 parties
· Alcool gras éthoxylé sulfate de sodium à 32% dans l'eau 2,25 "
· Alcool gras éthoxylé à 65% dans l'eau 0,45 "
· Monomères 100,00 "
· (Bicarbonate de sodium NaHCO₃ 0,20 ")

### Solution d'amorceur

· Eau 6,00 parties
· Persulfate de sodium 0,30 "

On laisse réagir une heure supplémentaire à 75°C.

On refroidit jusqu'à la température ambiante et on filtre sur une toile de 100 µm.

### Préparation des latex A, B et C

On a synthétisé les latex A, B et C à partir des monomères respectivement A, B et C tels qu'indiqués dans le Tableau 1, dans lequel sont également indiquées les caractéristiques des latex obtenus.

**Tableau 1**

| Monomères | A | B | C |
|---|---|---|---|
| • Acrylate d'éthyle | 90 | 97 | 54,7 |
| • Méthacrylate de méthyle | | | 33,3 |
| • Acide acrylique | | | 5,0 |
| • 1-(2-méthacryloyloxyéthyl)-imidazolin-2-one en solution à 50% dans le méthacrylate de méthyle, commercialisé par la Société "ELF ATOCHEM" sous la dénomination "NORSOCRYL 104" | 10 | | 5,0 |
| • N-méthylolacrylamide en solution aqueuse à 48% | | 3 | 2,0 |
| NaHCO₃ | non | oui | non |

| Latex | A | B | C |
|---|---|---|---|
| Extrait sec (%) | 45,3 | 44,0 | 44,6 |
| pH | 1,6 | 6,1 | 1,9 |
| Diamètre (nm) | 141 | 134 | 158 |
| Viscosité (mPa.s) | <100 | <100 | <100 |

### Exemple 2 : Réticulation et aptitude à la réticulation de films issus des latex A, B et C

Le degré de pré-réticulation de films obtenus à partir des latex respectivement A, B et C, par séchage à 23°C, 50% d'humidité relative, a été déterminé, sur des éprouvettes de 10 x 25 mm et d'épaisseur comprise entre 1 et 2 mm, après immersion pendant 24 heures dans l'acétone à température ambiante (mesure de la résistance au solvant acétone) par une mesure des pourcentages d'acétone absorbée (indice de gonflement) et des taux d'insolubles. Les résultats (à chaque fois moyenne de 3 mesures) sont rapportés dans le Tableau 2.

De la même façon, on a déterminé le degré de post-réticulation thermique sur des films obtenus à partir des latex respectivement A, B et C, séchés comme précédemment, puis soumis à un traitement thermique pendant 15 minutes à 160°C. Les résultats sont également indiqués dans le Tableau 2.

**Tableau 2**

| Film obtenu à partir du latex | A | B | C |
|---|---|---|---|
| Indice de gonflement (23°C) (%) | 10,9 | 30,3 | 3,3 |
| Indice de gonflement (160°C) (%) | 8,3 | 5,6 | 3,1 |
| % Insolubles (23°C) | 72,3 | 72,4 | 95,3 |
| % Insolubles (160°C) | 90,5 | 90,7 | 96,1 |

Le film de latex A présente un certain degré de pré-réticulation et une légère aptitude à la post-réticulation thermique, alors que le film de latex B n'est que légèrement pré-réticulé, mais présente une excellente aptitude à la réticulation thermique.

Quant au latex C, il est très fortement pré-réticulé, aucune post-réticulation n'étant observée.

### Exemple 3 : Mélange de latex coréactifs

On a mélangé à température ambiante les latex A et B dans la proportion 50:50. Les caractéristiques du film provenant de ce mélange ont été examinées comme à l'Exemple 2 : après séchage à 23°C, 50% HR, puis après traitement thermique pendant 15 minutes à 160°C.

Les résultats sont rapportés dans le Tableau 3, lequel reprend également, à des fins de comparaison, les données du Tableau 2.

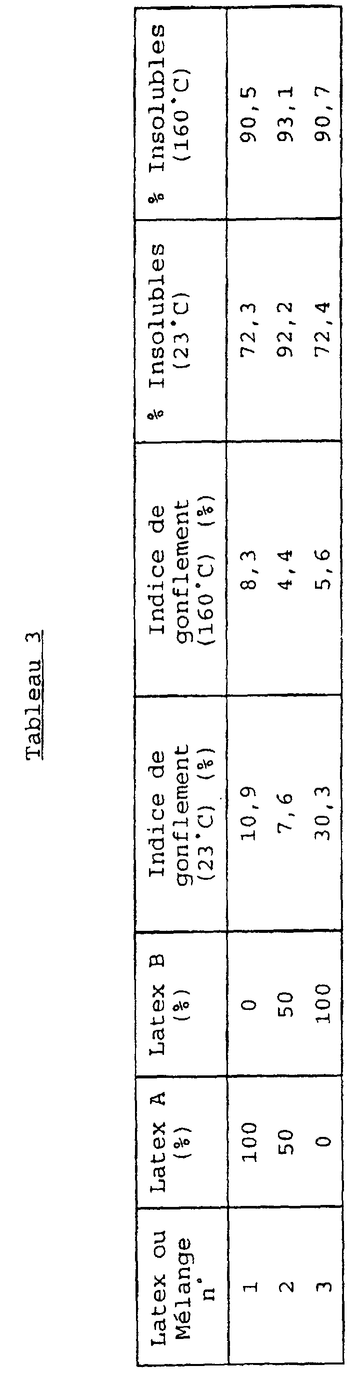

Les films obtenus à partir des mélanges des latex A et B présentent un degré de réticulation supérieur à celui des films obtenus à partir des latex de base A et B, traduisant l'existence d'une réticulation à température ambiante. Cette réticulation peut être augmentée par un traitement thermique, contrairement au latex C, au sein duquel sont associés les deux monomères fonctionnels : 1-(2-méthacryloyloxyéthyl)-imidazolin-2-one et N-méthylol acrylamide, et pour lequel aucune post-réticulation n'est observée.

### Exemple 4 : Propriétés mécaniques

Les propriétés mécaniques du film issu du mélange N·2 sont comparées aux propriétés mécaniques des films obtenus à partir des latex A et B, à l'aide d'un test de traction réalisé selon la norme ISO 527. Les résultats sont présentés dans le Tableau 4.

**Tableau 4**

| Film obtenu à partir du latex | Allongement à la rupture (%) séchage 23°C | Contrainte à la rupture (MPa) séchage 23°C | Allongement à la rupture (%) recuit 160°C | Contrainte à la rupture (MPa) recuit 160°C |
|---|---|---|---|---|
| A | 486 | 1,15 | 440 | 0,64 |
| B | 347 | 1,93 | 134 | 1,3 |
| Mélange N·2 | 306 | 1,9 | 214 | 1,57 |

### Exemple 5 : Stabilité au stockage

Le mélange N·2 est placé 10 jours à 60°C, puis refroidi à température ambiante. Un nouveau film est alors préparé comme précédemment par séchage du latex à 23°C. La résistance à l'acétone du film avant et après traitement thermique est comparée à celle du film issu du mélange frais, les résultats étant présentés dans le Tableau 5.

**Tableau 5**

| Film obtenu à partir du latex | Indice de gonflement (23°C) (%) | Indice de gonflement (160°C) (%) | % insolubles (23°C) | % insolubles (160°C) |
|---|---|---|---|---|
| Mélange N·2 | 7,6 | 4,4 | 92,2 | 93,1 |
| Mélange N·2 (10j ; 60°C) | 6,1 | 4,3 | 86,9 | 93,9 |

Les propriétés du film après vieillissement accéléré du latex pendant 10 jours à 60°C sont sensiblement équivalentes à celle du film obtenu sur le latex frais.

### Exemple 6 : Dosage de formol

Le formol libérable est déterminé par analyse chromatographique en soumettant un film à un traitement thermique de 30 minutes à 160°C, les composés dégagés étant piégés dans une solution aqueuse contenant du dinitrophényl hydrazide destiné à dériver le formol. La solution aqueuse recueillie dans le piège est analysée en chromatographie en phase vapeur.

Le formol libre est obtenu par différence entre le formol libérable et le formol total, ce dernier étant obtenu en soumettant un échantillon de latex au même traitement que précédemment.

Les résultats sont présentés dans le Tableau 6.

**Tableau 6**

| Film obtenu à partir du latex | Formol libre (ppm) | Formol libérable (ppm) |
|---|---|---|
| A | - | - |
| B | 339 | 197 |
| C | 74 | 26 |
| Mélange N°2 | 109 | 23 |

Le mélange N·2 conduit à des taux de formol comparables à ceux que donne le latex C, mais présente l'avantage de conduire à des films post-réticulables comme on l'a vu ci-dessus.

## Revendications

1. Système monocomposant à base de latex coréactifs, susceptible de conduire à des revêtements réticulables à basse température et post-réticulables par traitement thermique, ledit système étant constitué par le mélange de deux dispersions de particules, (A) et (B), obtenues chacune par polymérisation en émulsion en milieu aqueux d'une composition de monomères respectivement A et B,
(a) au moins un monomère à insaturation éthylénique polymérisable par voie radicalaire, comportant un groupe fonctionnel 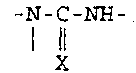 X représentant O ou S, entrant dans la composition de monomères A ; et
(b) au moins un monomère à insaturation éthylénique polymérisable par voie radicalaire, comportant un groupe fonctionnel N-alkylol ou N-alkylol masqué, entrant dans la composition de monomères B.

2. Système selon la revendication 1, **caractérisé par le fait que** le ou les monomères (a) sont choisis parmi ceux représentés par les formules (I) à (III) ci-après : 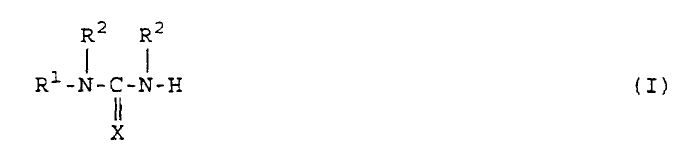 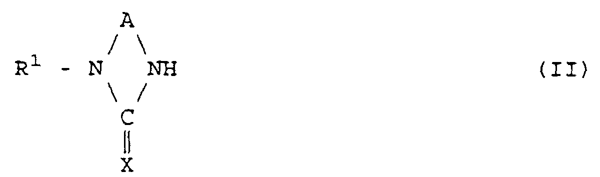 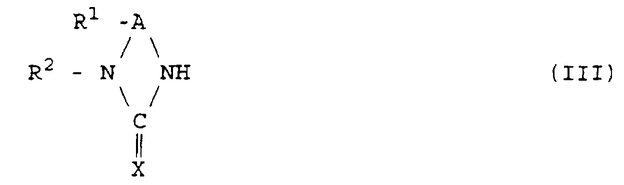 dans lesquelles :
- X représente O ou S ;
- R¹ est un groupement à insaturation éthylénique, polymérisable par voie radicalaire ;
- R² est un atome d'hydrogène ou un groupe alkyle en C₁-C₈ ; et
- A est une chaîne alkylène à 2 ou 3 atomes de carbone qui peut être substituée par alkyle inférieur et/ou hydroxy et/ou alcoxy en C₁-C₄, et/ou qui peut être interrompue par carbonyle.

3. Système selon la revendication 2, **caractérisé par le fait que** R¹ est choisi parmi les groupes :
•
CH₂=CH-
•
CH₂=CH-CH₂-
• 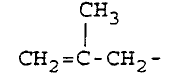
• 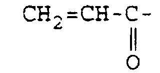
• 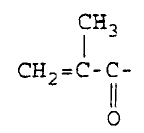
• 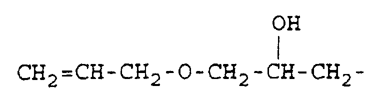
•
R³-A¹-Alk-
où :
- R³ représente hydrogène, 3-alkyloxy-2-hydroxypropyle, vinyle, méthacryloyle, acryloyle ou méthacryloyloxyacéto ;
- A¹ représente O, NH ou NR⁴ ;
- R⁴ représente 3-allyloxy-2-hydroxypropyle lorsque R³ représente 3-allyloxy-2-hydroxypropyle ;
- Alk représente une chaîne alkylène en C₂-C₈; et
• 2-(β-carboxyacrylamido)éthyle.

4. Système selon l'une des revendications 2 et 3, **caractérisé par le fait que** le ou les monomères (a) sont choisis parmi la N-(2-méthacryloyloxyéthyl) éthylène urée, la N-(2-acryloyloxyéthyl) éthylène urée, la N-(méthacrylamidométhylène) éthylène urée, la N-(acrylamidométhylène)-éthylène urée, la N-(β-méthacrylamidoéthyl)-éthylène urée, la N-(β-acrylamidoéthyl)-éthylène urée, la N-vinyl-éthylène urée, la N-vinyloxyéthyl-éthylène urée, la N-[β-méthacryloyloxyacétamido)-éthyl]-N,N'-éthylène urée, la N-[β-acryloyloxyacétamido)-éthyl]-échylène urée, la 1-[2-[[2-hydroxy-3-(2-propényloxy)propyl]amino]éthyl]-2-imidazolidone, la N-méthacrylamidométhyl urée, la N-méthacryloyl urée, le N-(3-[1,3-diazacyclohexan-2-one]-propyl)méthacrylamide, la N-hydroxyéthyléthylène urée, la N-aminoéthyl éthylène urée, la N-(3-allyloxy-2-hydroxypropyl)aminoéthyl éthylène urée, la N-méthacrylaminoéthyl éthylène urée, la N-acrylaminoéthyl éthylène urée, la N-méthacryloxyacétoxyéthyl éthylène urée, la N-méthacryloxy-acétaminoéthyl éthylène urée et la N-di(3-allyloxy-2-hydroxy-propyl)aminoéthyl éthylène urée, la N-(2-acryloyl-oxy-éthyl)éthylène urée, la N-méthacrylamidométhyl urée, et les allyl alkyl éthylène urées.

5. Système selon la revendication 4, **caractérisé par le fait que** le monomère (a) est la N-(2-méthacryloyloxyéthyl)-éthylène urée (1-(2-méthacryloyloxyéthyl)-imidazolin-2-one).

6. Système selon l'une des revendications 1 à 5, **caractérisé par le fait que** le ou les monomères (b) sont choisis parmi les N-méthylolamides d'acides carboxyliques insaturés ayant 3 à 10 atomes de carbone, tels que le N-méthylolacrylamide et le N-méthylolméthacrylamide, le N-méthylolmaléimide, l'acide N-méthylolmaléinamique, les esters d'acide N-méthylolmaléinamique, les N-méthylolamides des acides vinyl aromatiques, tels que le N-méthylol-p-vinylbenzamide, et les N-(alcoxy inférieur-méthyl)amides de l'acide acrylique et/ou méthacrylique.

7. Système selon la revendication 6, **caractérisé par le fait que** le monomère (b) est le N-méthylol(méth)acrylamide.

8. Système selon l'une des revendications 1 à 7, **caractérisé par le fait que** le ou les monomères (a) et (b) représentent de 0,5 à 10% en poids de la composition de monomères respectivement A et B.

9. Système selon l'une des revendications 1 à 7, **caractérisé par le fait que** les proportions des deux latex coréactifs sont choisies telles que la proportion du polymère (A) est comprise entre 5 et 95% en poids des polymères (A) et (B), et la proportion du polymère (B) est comprise entre 95 et 5% en poids des polymères (A) et (B), les extraits secs de chacune des dispersions étant compris entre 20 et 60% en poids.

10. Système selon l'une des revendications 1 à 9, **caractérisé par le fait que** la dimension des particules de chacune des dispersions (A) et (B) est comprise entre 50 et 500 nm.

11. Système selon l'une des revendications 1 à 10, **caractérisé par le fait que** les monomères autres que les monomères (a) et (b) des deux dispersions de particules (A) et (B) sont choisis pour que les températures de transition vitreuse (Tg) des copolymères résultants soient adaptées au domaine d'application visé, par la combinaison de monomères capables de conduire à des homopolymères ayant une Tg élevée avec des monomères capables de conduire à des homopolymères ayant une basse Tg.

12. Système selon la revendication 11, **caractérisé par le fait que** les monomères capables de conduire à des homopolymères ayant une basse Tg sont choisis parmi l'acrylate d'éthyle, l'acrylate de butyle, l'acrylate de 2-éthyl hexyle, l'acrylate de nonyle, le vinyl 2-éthyl hexanoate ; et les monomères capables de conduire à des homopolymères ayant une Tg élevée sont choisis parmi le méthacrylate de méthyle, l'acétate de vinyle, le styrène, l'acide acrylique, l'acide méthacrylique, l'acrylamide.

13. Utilisation d'un système monocomposant à base de latex coréactifs, tel que défini à l'une des revendications 1 à 12, comme liant dans des compositions destinées à constituer un revêtement réticulable, tel qu'une peinture dans le domaine du bâtiment, un vernis ou un apprêt pour cuirs, un apprêt pour textile, un vernis de protection pour bois, ou dans des compositions pour le couchage du papier ; comme liant et/ou agent d'imprégnation pour diverses matières textiles tissées ou non-tissées, papier, carton, nappes de fibres ; et comme adhésif, notamment dans l'industrie du bois.

## Claims

1. One-component system based on coreactive latexes which is able to lead to coatings which are crosslinkable at low temperature and post-crosslinkable by heat treatment, the said system consisting of the mixture of two particle dispersions (A) and (B), each obtained by aqueous emulsion polymerization of a monomer composition A and B, respectively,
(a) at least one free-radically polymerizable ethylenically unsaturated monomer comprising a functional group 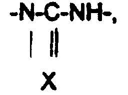 where X represents O or S, which enters into the monomer composition A; and
(b) at least one free-radically polymerizable ethylenically unsaturated monomer comprising an N-alkylol or masked N-alkylol functional group, which enters into the monomer composition B.

2. System according to Claim 1, **characterized in that** the monomer or monomers (a) are selected from those represented by the formulae (I) to (III) below: 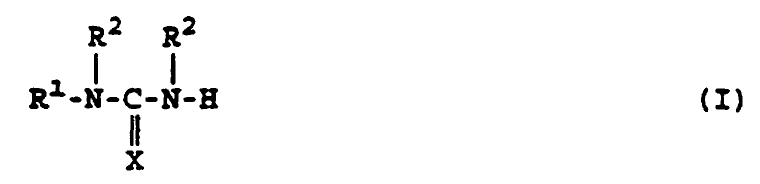 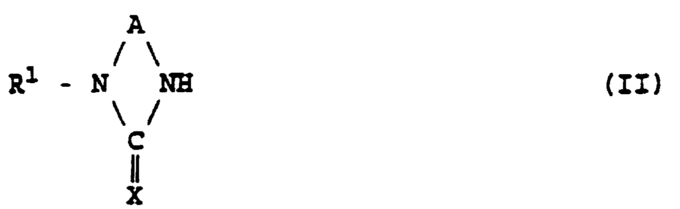 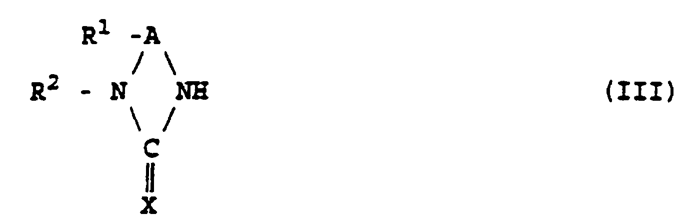 in which:
- X represents O or S;
- R¹ is a free-radically polymerizable ethylenically unsaturated group;
- R² is a hydrogen atom or a C₁-C₈ alkyl group; and
- A is an alkylene chain which has 2 or 3 carbon atoms and can be substituted by lower alkyl and/or hydroxyl and/or C₁-C₄ alkoxy, and/or which can be interrupted by carbonyl.

3. System according to Claim 2, **characterized in that** R¹ is selected from the groups:
•
**CH**_{**2**}**=CH-**
•
**CH**_{**2**}**=CH-CH**_{**2**}**-**
• 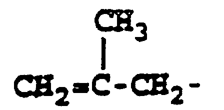
• 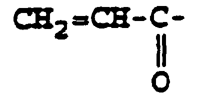
• 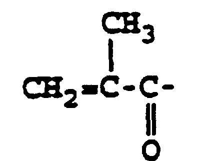
• 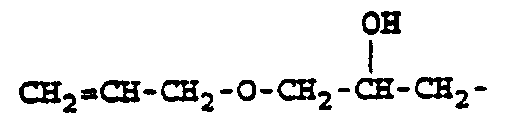
•
**• R**^{**3**}**-A**^{**1**}**-Alk-**
where:
- R³ represents hydrogen, 3-alkyloxy-2-hydroxypropyl, vinyl, methacryloyl, acryloyl or methacryloyloxyaceto;
- A¹ represents O, NH or NR⁴;
- R⁴ represents 3-allyloxy-2-hydroxypropyl when R³ represents 3-allyloxy-2-hydroxypropyl;
- Alk represents a C₂-C₈ alkylene chain; and
• 2-(β-carboxyacrylamido)ethyl.

4. System according to either of Claims 2 and 3, **characterized in that** the monomer or monomers (a) are selected from N-(2-methacryloyloxyethyl)ethyleneurea, N-(2-acryloyloxyethyl)ethyleneurea, N-(methacrylamido-methylene)ethyleneurea, N-(acrylamidomethylene)ethylene-urea, N-(β-methacrylamidoethyl)ethyleneurea, N-(β-acryl-amidoethyl)ethyleneurea, N-vinylethyleneurea, N-vinyl-oxyethylethyleneurea, N-[β-(methacryloyloxyacet-amido)ethyl]-N,N'-ethyleneurea, N-[β-(acryloyloxyacet-amido)ethyl]ethyleneurea, 1-[2-[[2-hydroxy-3-(2-propenyloxy)propyl]amino]ethyl]-2-imidazolidone, N-methacrylamidomethylurea, N-methacryloylurea, N-(3-[1,3-diazacyclohexan-2-one]propyl)methacrylamide, N-hydroxy-ethylethyleneurea, N-aminoethylethyleneurea, N-(3-allyloxy-2-hydroxypropyl)aminoethylethyleneurea, N-methacrylaminoethylethyleneurea, N-acrylaminoethylethylene-urea, N-methacryloxyacetoxyethylethyleneurea, N-methacryloxyacetaminoethylethyleneurea and N-di(3-allyloxy-2-hydroxypropyl) aminoethylethyleneurea, N-(2-acryloyloxyethyl) ethyleneurea, N-methacrylamidomethylurea and the allylalkylethyleneureas.

5. System according to Claim 4, **characterized in that** the monomer (a) is N-(2-methacryloyloxyethyl)ethyleneurea(1-(2-methacryloyloxyethyl)imidazolin-2-one).

6. System according to one of Claims 1 to 5, **characterized in that** the monomer or monomers (b) are selected from N-methylolamides of unsaturated carboxylic acids having 3 to 10 carbon atoms, such as N-methylolacrylamide and N-methylolmethacrylamide, N-methylolmaleimide, N-methylolmaleamic acid, esters of N-methylolmaleamic acid, N-methylolamides of vinylaromatic acids, such as N-methylol-p-vinylbenzamide, and N-(lower alkoxy-methyl)amides of acrylic and/or methacrylic acid.

7. System according to Claim 6, **characterized in that** the monomer (b) is N-methylol(meth)acrylamide.

8. System according to one of Claims 1 to 7, **characterized in that** the monomer or monomers (a) and (b) represent from 0.5 to 10% by weight of the monomer composition A and B respectively.

9. System according to one of Claims 1 to 7, **characterized in that** the proportions of the two coreactive latexes are chosen such that the proportion of the polymer (A) is between 5 and 95% by weight, of the polymers (A) and (B), and the proportion of the polymer (B) is between 95 and 5% by weight, of the polymers (A) and (B), the nonvolatiles content of each of the dispersions generally being between 20 and 60% by weight.

10. System according to one of Claims 1 to 9, **characterized in that** the size of the particles of each of the dispersions (A) and (B) is between 50 and 500 nm.

11. System according to one of Claims 1 to 10, **characterized in that** the monomers other than the monomers (a) and (b) of the two particle dispersions (A) and (B) are chosen so that the glass transition temperatures (Tg) of the resulting copolymers are adapted to the intended field of application, by the combination of monomers capable of leading to homopolymers having a high Tg with monomers capable of leading to homopolymers having a low Tg.

12. System according to Claim 11, **characterized in that** the monomers capable of leading to homopolymers having a low Tg are selected from ethyl acrylate, butyl acrylate, 2-ethylhexyl acrylate, nonyl acrylate and vinyl 2-ethylhexanoate; and the monomers capable of leading to homopolymers having a high Tg are selected from methyl methacrylate, vinyl acetate, styrene, acrylic acid, methacrylic acid and acrylamide.

13. Use of a one-component system based on coreactive latexes, as defined in one of Claims 1 to 12, as a binder in compositions intended for producing a crosslinkable coating, such as a paint in the architectural field, a varnish or a finish for leather, a finish for textiles, a protective varnish for wood, or in compositions for the coating of paper; as a binder and/or impregnating agent for various woven or nonwoven textile materials, paper, cardboard, fibre webs; and as an adhesive, especially in the woodworking industry.

## Patentansprüche

1. Einkomponentensystem auf der Basis coreaktiver Latices, das für die Erzeugung von Beschichtungen geeignet ist, die bei niedriger Temperatur vernetzbar sind und durch Wärmebehandlung nachvernetzbar sind, wobei das System aus dem Gemisch von zwei Partikel-Dispersionen (A) und (B) besteht, die durch Emulsionspolymerisation, die in wäßrigem Medium durchgeführt wird, einer Monomeren-Zusammensetzung A bzw. einer Monomeren-Zusammensetzung B erhalten werden,
(a) wobei mindestens ein radikalisch polymerisierbares ethylenisch ungesättigtes Monomer, das eine funktionelle Gruppe 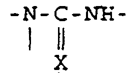 aufweist, worin X Sauerstoff oder Schwefel bedeutet, Bestandteil der Monomeren-Zusammensetzung A ist; und
(b) wobei mindestens ein radikalisch polymerisierbares ethylenisch ungesättigtes Monomer, das eine N-Alkylolgruppe oder eine maskierte N-Alklyolgruppe aufweist, Bestandteil der Monomeren-Zusammensetzung B ist.

2. System nach Anspruch 1, **dadurch gekennzeichnet, daß** das oder die Monomere (a) unter den Monomeren der folgenden Formeln (I) bis (III) 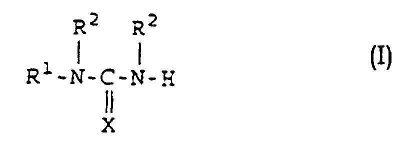 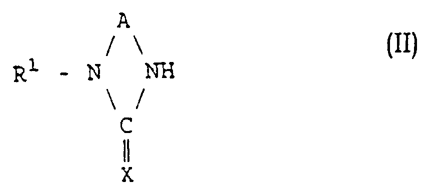 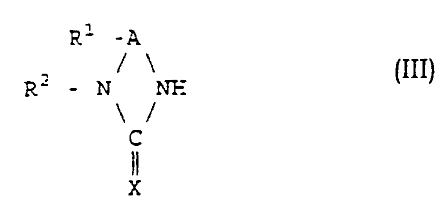 ausgewählt sind, in denen bedeuten:
- X Sauerstoff oder Schwefel;
- R¹ eine radikalisch polymerisierbare, ethylenisch ungesättigte Gruppe,
- R² Wasserstoff oder C₁-C₈-Alkyl und
- A eine Alkylenkette mit 2 oder 3 Kohlenstoffatomen, die mit niederem Alkyl und/oder Hydroxy und/oder C₁-C₄-Alkoxy substituiert sein kann und/oder die durch eine Carbonylgruppe unterbrochen sein kann.

3. System nach Anspruch 2, **dadurch gekennzeichnet, daß** R² ausgewählt ist unter den Gruppen:
•
CH₂=CH-
•
CH₂=CH-CH₂-
• 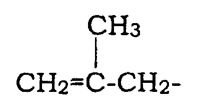
• 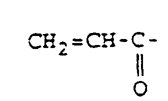
• 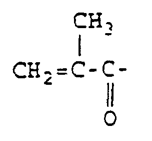
• 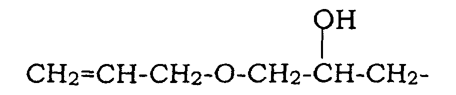
•
R³-A¹-Alk-,
worin bedeuten:
- R³ Wasserstoff, 3-Alkyloxy-2-hydroxypropyl, Vinyl, Methacryloyl, Acryloyl oder Methacryloyloxyaceto;
- A¹ Sauerstoff, NH oder NR⁴;
- R⁴ 3-Allyloxy-2-hydroxypropyl, wenn R³ 3-Allyloxy-2-hydroxypropyl bedeutet,
- Alk eine C₂-C₈-Alkylenkette und
• 2-(ß-Carboxyacrylamido)-ethyl.

4. System nach einem der Ansprüche 2 und 3, **dadurch gekennzeichnet, daß** das oder die Monomere (a) ausgewählt sind unter:
N-(2-Methacryloyloxyethyl)-ethylenharnstoff, N-(2-Acryloyloxyethyl)-ethylenharnstoff, N-(Methacrylamidomethylen)-ethylenharnstoff,
N-(Acrylamidomethylen)-ethylenharnstoff, N-(β-Methacrylamidoethyl)-ethylenharnstoff, N-(β-Acrylamidoethyl)-ethylenharnstoff,
N-Vinylethylenharnstoff, N-Vinyloxyethylethylenharnstoff,
N-[β-Methacryloyloxyacetamido) -ethyl] -N,N'-ethylenharnstoff,
N-[β-Acryloyloxyacetamido)-ethyll-ethylenharnstoff, 1-[2-[2-Hydroxy-3-(2-propenyloxy)-propyl]-amino]-ethyl]-2-imidazolidon, N-Methacrylamidomethylharnstoff, N-Methacryloylharnstoff, N-(3-[1,3-Diazacyclohexan-2-on]-propyl)-methacrylamid, N-Hydroxyethylethylenharnstoff, N-Aminoethylethylenharnstoff, N-(3-Allyloxy-2-hydroxypropyl)-aminoethylethylenharnstoff, N-Methacrylaminoethylethylenharnstoff, N-Acrylaminoethylethylenharnstoff, N-Methacryloxyacetoxyethylethylenharnstoff, N-Methacryloxyacetaminoethylethylenharnstoff und N-Di-(3-allyloxy-2-hydroxypropyl)-aminoethylethylenharnstoff, N-(2-Acryloyloxyethyl)-ethylenharnstoff,
N-Methacrylamidomethylharnstoff und den Allylalkylethylenharnstoffen.

5. System nach Anspruch 4, **dadurch gekennzeichnet, daß** es sich bei dem Monomer (a) um N-(2-Methacryloyloxyethyl)-ethylenharnstoff (1-(2-methacryloyloxyethyl)-imidazolin-2-on) handelt.

6. System nach einem der Ansprüche 1 bis 5, **dadurch gekennzeichnet, daß** das oder die Monomere (b) ausgewählt sind unter den N-Methylolamiden von ungesättigten Carbonsäuren, die 3 bis 10 Kohlenstoffatome aufweisen, wie N-Methylolacrylamid und N-Methylolmethacrylamid, N-Methylolmaleimid, N-Methylolmaleinamidsäure, den Estern der N-Methylolmaleinamidsäure, den N-Methylolamiden von vinylaromatischen Säuren, wie N-Methylol-p-vinylbenzamid, und den N-(niederes Alkoxy-methyl)-amiden von Acrylsäure und/oder Methacrylsäure.

7. System nach Anspruch 6, **dadurch gekennzeichnet, daß** es sich bei dem Monomer (b) um N-Methylol(meth)acrylamid handelt.

8. System nach einem der Ansprüche 1 bis 7, **dadurch gekennzeichnet, daß** das oder die Monomere (a) und (b) 0,5 bis 10 Gew.-% der Monomeren-Zusammensetzung A bzw. der Monomeren-Zusammensetzung B ausmachen.

9. System nach einem der Ansprüche 1 bis 7, **dadurch gekennzeichnet, daß** die Mengenanteile der beiden coreaktiven Latices so gewählt sind, daß der Mengenanteil des Polymers (A) im Bereich von 5 bis 95 Gew.-% der Polymere (A) und (B) und der Mengenanteil des Polymers (B) im Bereich von 95 bis 5 Gew.-% der Polymere (A) und (B) liegt, wobei der Trockenextrakt jeder der Dispersionen im Bereich von 20 bis 60 Gew.-% liegt.

10. System nach einem der Ansprüche 1 bis 9, **dadurch gekennzeichnet, daß** die Größe der Partikel der Dispersion (A) und der Dispersion (B) im Bereich von 50 bis 500 nm liegt.

11. System nach einem der Ansprüche 1 bis 10, **dadurch gekennzeichnet, daß** die Monomere für die beiden Partikeldispersionen (A) und (B), die von den Monomeren (a) und (b) verschieden sind, so ausgewählt sind, daß die Glasübergangstemperaturen (Tg) der gebildeten Copolymere an das anvisierte Anwendungsgebiet angepaßt sind durch die Kombination von Monomeren, die zu Homopolymeren mit einer hohen Tg führen können, mit Monomeren, die zu Homopolymeren mit einer niedrigen Tg führen können.

12. System nach Anspruch 11, **dadurch gekennzeichnet, daß** die Monomere, die zu Homopolymeren mit einer niedrigen Tg führen können, ausgewählt sind unter Ethylacrylat, Butylacrylat, 2-Ethylhexylacrylat, Nonylacrylat, Vinyl-2-ethylhexanoat, und daß die Monomere, die zu Homopolymeren mit einer hohen Tg führen können, ausgewählt sind unter Methylmethacrylat, Vinylacetat, Styrol, Acrylsäure, Methacrylsäure, Acrylamid.

13. Verwendung eines Einkomponentensystems auf der Basis coreaktiver Latices, das wie in einem der Ansprüche 1 bis 12 definiert ist, als Bindemittel in Zusammensetzungen, die dafür vorgesehen sind, eine vernetzbare Beschichtung zu bilden, wie Anstrichmittel für das Baugewerbe, Lacke oder Appreturmittel für Leder, Appreturmittel für Textilien, Holzschutzlacke oder in Zusammensetzungen für die Papierbeschichtung, als Bindemittel und/oder Imprägniermittel für verschiedene gewebte Textilien oder Filzmaterialien, Papier, Pappe, Faservliese; und als Klebstoff, insbesondere in der Holzindustrie.
